# EUROPEAN PATENT APPLICATION

(11) **EP 1 134 688 A1**
(43) Date of publication of application: **19.09.2001**
(21) Application number: 00105691.0
(22) Date of filing: 17.03.2000
(51) Int. Cl.: G06K 7/00, G06K 13/08

(54) **IC card connector**

(71) Applicant: MOLEX INCORPORATED, Lisle Illinois 60532 (US)
(72) Inventor: Zuin, Gianni, 35035 Mestrino, Padova (IT)
(74) Representative: Blumbach, Kramer & Partner GbR

(57) **Abstract**

An IC card connector is provided for connecting an IC card having a terminal array. The connector includes a base member having a receptacle for receiving the IC card for movement to a latched position. A plurality of electrically conductive contacts are mounted on the base member for engaging the terminal array of the IC card. A latch/eject mechanism is movably mounted on the base member and is engageable with the IC card to eject the card from its latched position. The mechanism includes a member having an integrally formed resilient latch portion for holding the IC card in its latched position.

## Description

### Field of the Invention

This invention generally relates to the art of electrical connectors and, particularly, to an IC card connector for connecting an IC card, such as a multi media card, in an IC card reader system such as a videocamera or smartphone or the like.

### Background of the Invention

IC cards have been developed and contain IC's (integrated circuits) including memory circuits, such as rams (random access memories), and control circuits, such as CPUs (central processing units). A special type of IC card, called a multi media card (or "MMC") is of increasing interest and is used in small electronic devices such as videocameras, smartphones, music players and the like. Multi media cards normally include a terminal array for connection through a card reader system to the external equipment. The connector usually includes some form of IC card socket and a plurality of electrodes or contacts exposed in the socket for engaging the terminal array of the IC card. The card is inserted into and removed from the socket, and the connector contacts are resilient or comprise springy contacts for yieldably engaging the terminal array of the card when the card is inserted into the socket.

With the ever-increasing miniaturization of IC cards and their respective connectors, various problems continue to arise. For instance, the very handling of the miniature IC cards is difficult, and proper positioning of the cards in the connector presents corresponding problems when the card is inserted into and removed from the card-receiving cavity or other receptacle means of the connector. Such card connectors may have locking means for holding the IC card in a locked reading position, but such locking means often have reliability problems. Still further, it often is very difficult to grip and remove the inserted IC card from the connector. This invention is directed to solving these various problems in a multi media card connector which is reliable and simple to manufacture and assemble.

### Summary of the Invention

An object, therefore, of the invention is to provide a new and improved IC card connector for connecting an IC card having a terminal array, in an IC card reader system or the like.

In the exemplary embodiment of the invention, the connector includes a base member having receptacle means for receiving the IC card for movement to a latched position. The base member includes a plurality of electrically conductive contacts for engaging the terminal array of the IC card. A latch/eject mechanism is movably mounted on the base member and is engageable with the IC card to eject the card from its latched position. The latch/eject mechanism includes a member having an integrally formed resilient latch portion for holding the IC card in its latched position.

As disclosed herein, the latch/eject mechanism includes a linearly movable push member engageable with a pivotally movable eject lever. The push member has the resilient latch portion integral therewith. In the preferred embodiment, the push member is molded of plastic material, and the resilient latch portion is molded integrally therewith. The latch portion is formed by a resilient arm having a latch hook near a distal end thereof.

The eject lever is pivotally mounted to the base member intermediate opposite ends of the lever. One opposite end of the lever is engageable by the push member, and the other opposite end of the lever is engageable with the IC card. In the preferred embodiment, the push member is an elongated push rod having an inner end engageable with the one opposite end of the eject lever and an outer end accessible from exteriorly of the base member for actuating the latch/eject mechanism. The latch hook of the resilient latch arm is located near the outer end of the push rod.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of an IC card connector embodying the concepts of the invention, with an IC card fully inserted into the connector to a latched position;
FIGURE 2 is a view similar to that of Figure 1, with the cover of the connector removed to facilitate the illustration;
FIGURE 3 is a fragmented, enlarged perspective view of the area of the connector where the integral latch hook is located for engaging an outer comer of the IC card;
FIGURE 4 is a fragmented, enlarged perspective view of the area of the connector beneath the push rod showing the retention means for the push rod; and
FIGURE 5 is a view similar to that of Figure 2, with the latch/eject mechanism actuated to eject the IC card from its latched position.

### Detailed Description of the Preferred Embodiment

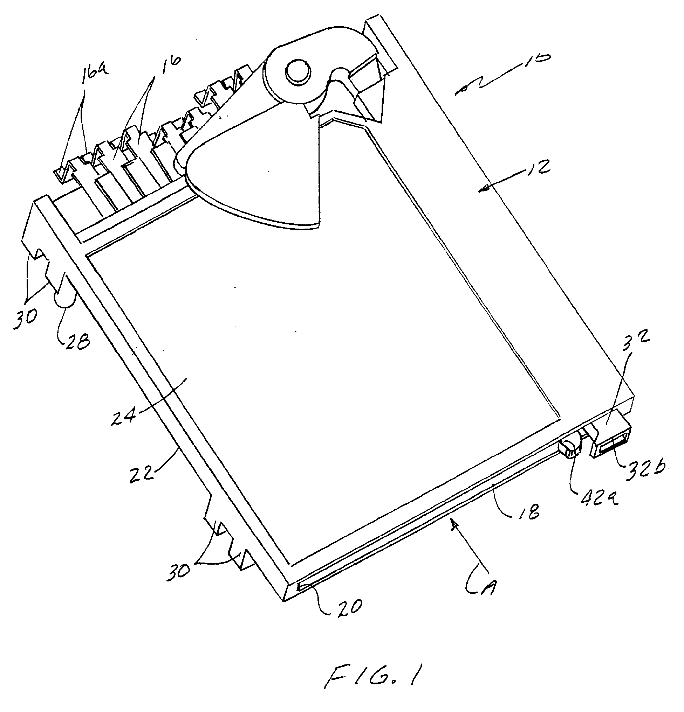

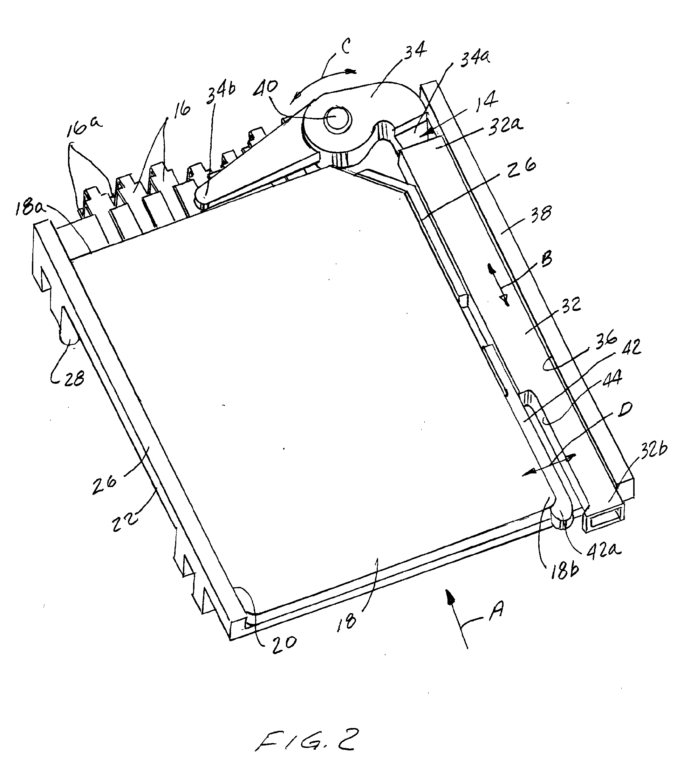

Referring to the drawings in greater detail, and first to Figures 1 and 2, the invention is embodied in an IC card connector, generally designated 10, which is extremely simple and includes two basic components, namely a housing, generally designated 12 (Fig. 1), and a latch/eject mechanism, generally designated 14 (Fig. 2), along with a plurality of conductive contacts 16. The connector is adapted for mounting on a printed circuit board, and contacts 16 have tail portions 16a for connection to circuit traces on the printed circuit board, as by soldering. An IC card 18 is inserted into a receptacle means 20 of the housing.

Housing 12 of connector 10 is a two-part structure including a base member 22 and a cover 24. The base member has a pair of side walls or guide rails 26 (Fig. 2) which define receptacle means 20 into which IC card 18 is inserted in the direction of arrow "A". The base member has a plurality of mounting posts 28 for insertion into appropriate mounting holes in the circuit board. The base member also has a plurality of standoffs 30 which depend therefrom for engaging, stabilizing and spacing the connector above the top surface of the circuit board.

Each of base member 22 and cover 24 may be a one-piece component molded of dielectric material such as plastic or the like. The cover may be adhered to the top of the base member by appropriate adhesive. Figure 2 shows the cover removed to better illustrate latch/eject mechanism 14. In particular, the latch/eject mechanism is a two-part structure including a push member 32 and an eject lever 34 for performing a dual function of latching IC card 18 in its latched position, as shown, and for ejecting the IC card from its latched position.

More particularly, push member 32 of latch/eject mechanism is formed by an elongated push rod linearly movable in a channel 36 in the direction of double-headed arrow "B" (Fig. 2). The channel is defined by an outside wall 38 and one of the guide rails 26 of base member 22. The elongated push rod has an inner end 32a engageable with eject lever 34 and an outer end 32b accessible from exteriorly of the housing for actuating the latch/eject mechanism, as described hereinafter.

Eject lever 34 may be molded of plastic material and staked onto a pivot post 40 molded integrally with and projecting upwardly from base member 22. The eject lever, thereby, is pivotally mounted on post 40 for pivotal movement in the direction of doubleheaded arrow "C" (Fig. 2). The eject lever is pivoted intermediate opposite ends thereof, including one opposite end 34a which is engageable with inner end 32a of push rod 32, and the other opposite end 32b is engageable with an inner edge 18a of IC card 18.

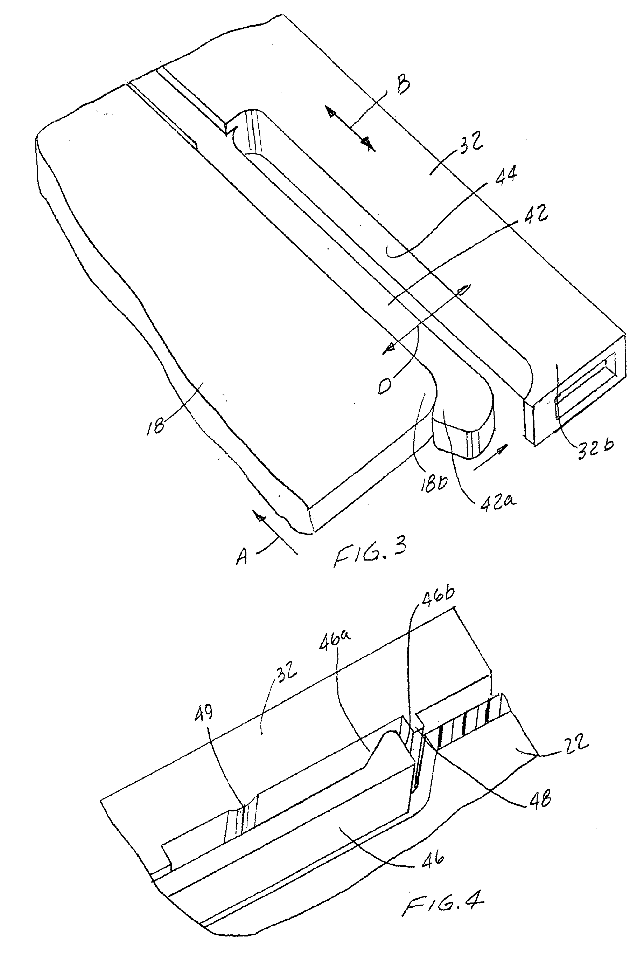

Referring to Figure 3 in conjunction with Figure 2, the invention generally contemplates that latch/eject mechanism 14 include a member having an integrally formed resilient latch portion for holding IC card 18 in its latched position and thereby eliminating separate or independent latch components of the prior art. Specifically, push rod 32 may be molded of plastic material, and a resilient latch arm 42 is molded integrally therewith. The resilient latch arm is spaced inwardly of the push rod by a recessed area 44 so that the latch arm can flex in the direction of double-headed arrow "D". The latch arm has a latch hook 42a at the distal end thereof, whereby the latch hook is engageable with a front comer 18b of the IC card in the latched position of the card.

In operation, IC card 18 is inserted into receptacle 20 in the direction of arrow "A". As the IC card is inserted, it will engage a rounded edge 42b (Fig. 3) at the extreme distal end of the latch arm and bias the latch arm outwardly in the direction of arrow "E". As the IC card reaches its fully inserted position shown in Figure 2, leading edge 18a of the card engages end 34b of eject lever 34 to bias the lever clockwise about pivot post 42. With the opposite end 34a of the lever in engagement with inner end 32a of push rod 32, the push rod will be moved linearly outwardly until latch hook 42a snaps back inwardly under the resiliency of latch arm 42 into engagement with front comer 18b of the IC card.

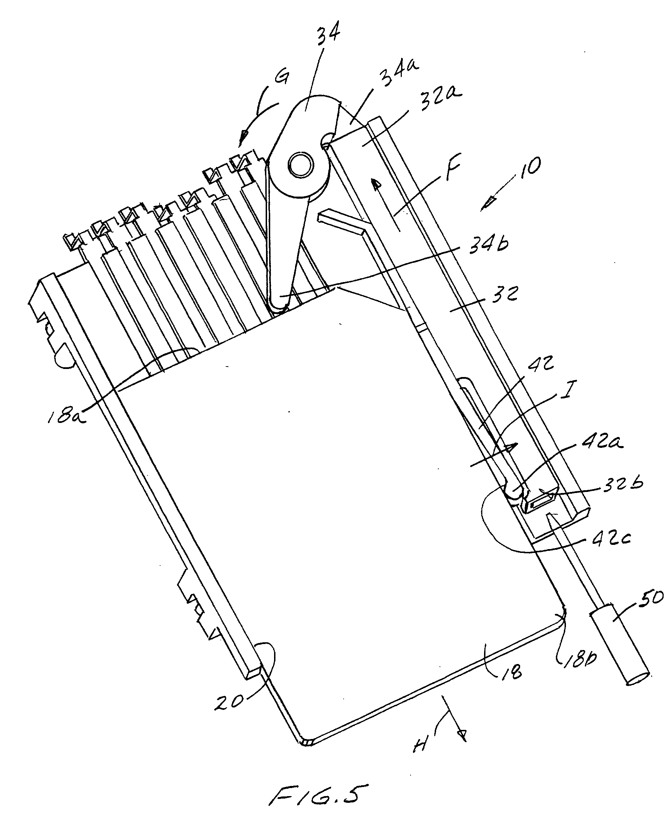

Figure 4 shows an area of base member 22 beneath push rod 32 when the push rod is in the latched position shown in Figures 1-3. The base member has an integrally molded, elastic retention finger 46 which is engageable with a stop flange 48 molded integrally with the underside of the push rod. This prevents the push rod from coming out of the connector housing. Retention finger 46 has a ramp 46a to allow assembly of the push rod and an abrupt distal end 46b for engaging stop flange 48 to retain the push rod once assembled. Ramp 46a rides back and forth over a rounded detent 49 on the underside of the push rod to provide a tactile indication of the eject position of the push rod as described below.

When it is desired to eject IC card 18 from connector 10, a tool such as a screwdriver 50 is used to engage outer end 32b of push rod 32 as seen in Figure 5. The push rod is moved linearly inwardly in the direction of arrow "F". With inner end 32a of the push rod in engagement with end 34a of eject lever 34, the lever will be pivoted in the direction of arrow "G" and cause the opposite end 34b of the lever to engage leading edge 18a of the IC card and eject the card in the direction of arrow "H". The inner edge 42c of latch hook 42a is rounded so that front comer 18b of the IC card can move past the latch hook and bias latch arm 42 outwardly in the direction of arrow "I". The IC card now can be grasped by a user and pulled out of receptacle 20.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. An IC card connector for connecting an IC card having a terminal array, comprising:
a base member having receptacle means for receiving the IC card for movement to a latched position, the base member including a plurality of electrically conductive contacts for engaging the terminal array of the IC card; and
a latch/eject mechanism movably mounted on the base member and engageable with the IC card to eject the card from its latched position, the mechanism including a member having an integrally formed resilient latch portion for holding the IC card in its latched position.

2. The IC card connector of claim 1 wherein said latch/eject mechanism includes a linearly movable push member engageable with a pivotally movable eject lever, the push member having said resilient latch portion integral therewith.

3. The IC card connector of claim 2 wherein said push member is molded of plastic material with said resilient latch portion being molded integrally therewith.

4. The IC card connector of claim 3 wherein said latch portion comprises a resilient arm having a latch hook near a distal end thereof.

5. The IC card connector of claim 2 wherein said push member is elongated with an inner end engageable with the eject lever and an outer end accessible from exteriorly of the base member for actuating the latch/eject mechanism.

6. The IC card connector of claim 5 wherein said resilient latch portion is near the outer end of the elongated push member for engaging an outer edge of the IC card.

7. The IC card connector of claim 2 wherein said eject lever is pivotally mounted to the base member intermediate opposite ends of the lever, one opposite end of the lever being engageable by said push member, and the other opposite end of the lever being engageable with the IC card.

8. The IC card connector of claim 1 wherein said latch/eject mechanism includes a linearly movable push member having said resilient latch portion integral therewith.

9. An IC card connector for connecting an IC card having a terminal array, comprising:
a base member having receptacle means for receiving the IC card for movement to a latched position, the base member including a plurality of electrically conductive contacts for engaging the terminal array of the IC card; and
a latch/eject mechanism movably mounted on the base member and engageable with the IC card to eject the card from its latched position, the mechanism including a linearly movable push member molded of plastic material and having an integrally molded resilient latch portion for holding the IC card in its latched position.

10. The IC card connector of claim 9 wherein said latch portion comprises a resilient arm having a latch hook near a distal end thereof.

11. The IC card connector of claim 9 wherein said push member comprises an elongated push rod having an outer end accessible from exteriorly of the base member for actuating the latch/eject mechanism.

12. The IC card connector of claim 11 wherein said latch/eject mechanism includes a pivotally movable eject lever engageable by an inner end of said elongated push rod.

13. An IC card connector for connecting an IC card having a terminal array, comprising:
a base member having receptacle means for receiving the IC card for movement to a latched position, the base member including a plurality of electrically conductive contacts for engaging the terminal array of the IC card; and
a latch/eject mechanism movably mounted on the base member and engageable with the IC card to eject the card from its latched position and including a linearly movable push member engageable with a pivotally movable eject lever,
said push member comprising an elongated push rod having an inner end engageable with the eject lever, an outer end accessible from exteriorly of the base member for actuating the latch/reject mechanism and an integrally formed resilient latch portion for holding the IC card in its latched position, and
said pivotally movable eject lever being pivotally mounted to the base member intermediate opposite ends of the lever, one opposite end of the lever being engageable by the inner end of the push rod and the other opposite end of the lever being engageable with the IC card.

14. The IC card connector of claim 13 wherein said push rod is molded of plastic material with said resilient latch portion being molded integrally therewith.

15. The IC card connector of claim 14 wherein said latch portion comprises a resilient arm having a latch hook near a distal end thereof.
